# FASCICULE DE BREVET EUROPEEN

(11) **EP 1 688 870 B1**
(45) Date de publication et mention de la délivrance du brevet: **18.11.2009**
(21) Numéro de dépôt: 06101393.4
(22) Date de dépôt: 07.02.2006
(51) Int. Cl.: G06K 19/073

(54) **Brouillage de la signature en courant d'un circuit intégré**
Verwürfelung der Strom-Signatur eines integrierten Schaltkreises
Scrambling the current signature of an integrated circuit

(30) Priorité: 08.02.2005 FR 0550367
(43) Date de publication de la demande: 09.08.2006
(73) Titulaire: ST MICROELECTRONICS S.A., 92120 Montrouge (FR); UNIVERSITE D'AIX-MARSEILLE I, 13331 MARSEILLE CEDEX (FR)
(72) Inventeur: TELANDRO, Vincent, 83000, TOULON (FR); MALHERBE, Alexandre, 13530, TRETS (FR); KUSSENER, Edith, 83200, LE REVEST LES EAUX (FR)
(74) Mandataire: de Beaumont, Michel

(56) Documents cités:
- EP-A- 1 113 386
- US-A1- 2003 118 190
- US-B1- 6 320 770

## Description

### Domaine de l'invention

La présente invention concerne de façon générale les circuits intégrés et, plus particulièrement, la protection d'algorithmes et/ou de données numériques manipulés par un circuit intégré contre d'éventuelles attaques par analyse de la consommation du circuit.

Un exemple d'application de la présente invention est le domaine des cartes à puce et autres étiquettes électroniques avec ou sans contacts.

### Exposé de l'art antérieur

La consommation d'un circuit électronique, notamment d'un circuit de traitement de données numériques, varie en fonction de l'activité de ce circuit et plus particulièrement des calculs exécutés. Lorsqu'un circuit exécute un algorithme qui doit rester secret ou manipule des données ou quantités secrètes, on cherche généralement à éviter un piratage par analyse de la consommation du circuit. Un tel piratage fait appel à des attaques dites SPA (Simple Power Analysis) ou DPA (Differencial Power Analysis) qui examinent la signature en courant du circuit pour en découvrir le fonctionnement ou les données secrètes.

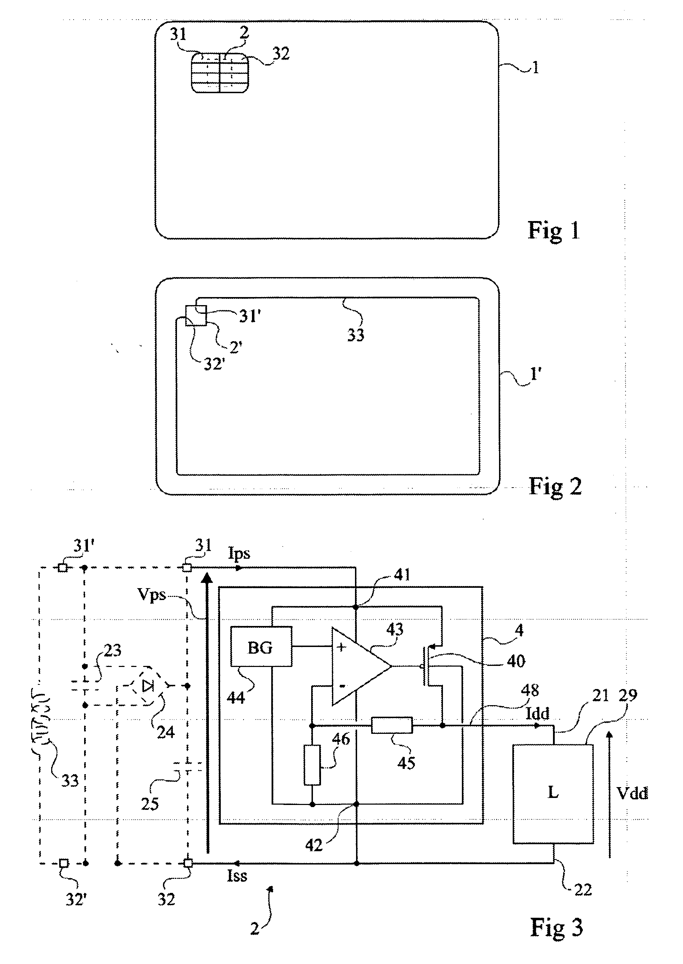

La figure 1 représente, de façon très schématique, une carte 1 à puce 2 à contacts du type auquel s'applique la présente invention. La carte 1 est constituée d'une plaque généralement en matière plastique sur laquelle est rapportée une puce 2 de circuit intégré accessible depuis l'extérieur par des contacts électriques 3 parmi lesquels au moins deux contacts 31 et 32 d'application d'une tension d'alimentation lorsque la carte est introduite dans un lecteur.

La figure 2 représente un deuxième exemple de carte à puce 1' auquel s'applique la présente invention. Il s'agit d'une carte sans contact généralement appelée transpondeur électromagnétique. La carte 1' comporte une puce 2' de circuit intégré dont deux bornes d'entrée 31' et 32' sont reliées aux deux extrémités respectives d'une piste conductrice 33, portée par la carte 1' et formant antenne. Cette antenne 33 fait partie d'un circuit résonant du transpondeur 1' pour capter non seulement des informations mais également une énergie de téléalimentation lorsque la carte se trouve à proximité d'un terminal générant un champ électromagnétique.

Les deux systèmes avec et sans contacts peuvent être présents sur une même carte, voire sur une même puce.

Que ce soit dans une carte avec ou sans contacts, la puce intègre un élément de régulation de la tension d'alimentation de ses circuits internes, dont le ou les circuits de calcul (généralement un microcontrôleur). La puce est considérée comme une zone sûre ou sécurisée du point de vue de la préservation des informations (algorithmes et données) qu'elle contient, ces informations n'étant accessibles que depuis les moyens de communication de la puce avec l'extérieur (contacts 3, 31 et 32 dans le cas d'une carte à contacts et signal radiofréquence ou bornes 31' et 32' dans le cas d'une carte sans contact).

La figure 3 représente, de façon très schématique et sous forme de blocs, un exemple classique de régulateur linéaire 4 fournissant, à partir d'une tension Vps présente entre les bornes 31 et 32, une tension continue régulée Vdd d'alimentation d'une charge 29 (L) constituée par les circuits internes à la puce hors régulateur 4.

Dans le cas d'une carte (1, figure 1) à contacts, les bornes 31 et 32 sont directement reliées aux bornes d'application de la tension d'alimentation du régulateur 4 comme cela est représenté en traits pleins en figure 3.

Dans le cas, représenté en pointillés en figure 3, d'une carte (1', figure 2) sans contact, les bornes 31' et 32' d'accès externe de la puce auxquelles est connectée l'antenne 33 (symbolisée par une inductance du circuit oscillant en figure 3) sont reliées aux bornes d'entrée alternative d'un pont de redressement 24. Un condensateur 23 participant au circuit oscillant relie les bornes 31' et 32' et les bornes de sortie redressée du pont 24 sont généralement reliées par un condensateur 25. Les bornes 31 et 32 d'application de la tension Vps en entrée du régulateur 4 sont reliées aux bornes de sortie redressée du pont 24. Des signaux (non représentés) sont prélevés en amont du régulateur (en entrée ou en sortie du pont 24), entre autres, pour récupérer un signal d'horloge du microcontrôleur aval.

Le régulateur 4 utilise un interrupteur 40 (typiquement, un transistor MOS à canal P) dont la source est directement reliée à une borne 41 d'application du potentiel positif (borne 31) de la tension d'alimentation Vps et dont la source est reliée directement à une borne 48 de sortie du régulateur 4 fournissant le potentiel positif de la tension Vdd. La grille du transistor 40 est reliée en sortie d'un amplificateur 43 à transconductance pour réguler la tension Vdd en fonction d'une consigne. Cette consigne est fournie par un circuit 44 (BG) de génération d'une tension de référence (généralement désignée par son appellation anglo-saxonne "bandgap") sur une entrée de référence (par exemple, non inverseuse) de l'amplificateur 43. L'entrée de mesure (par exemple, inverseuse) de l'amplificateur 43 est reliée au point milieu d'un pont diviseur constitué de deux résistances 45 et 46 en série entre la borne 48 et une borne 42 d'application du potentiel de référence (masse) de la tension d'entrée Vps. L'amplificateur 43 et le circuit 44 sont alimentés entre les bornes 41 et 42 (tension Vps).

En fonctionnement, le courant Ips entrant sur le plot 31 d'alimentation est directement proportionnel au courant Idd entrant sur le noeud interne 21 d'alimentation de la charge 29. Par conséquent, une analyse du courant Ips permet de déduire la signature en courant de la charge.

Côté borne 32 de référence, le courant Iss ressortant du circuit intégré par le plot 32 dépend directement du courant sortant de la charge par son plot de référence 22. Bien que le courant Iss contienne généralement moins d'information que le courant Ips en raison de l'intégration réalisée par les capacités du plan de masse, une analyse de la signature en courant du circuit intégré par examen du courant Iss est possible.

Pour déjouer des tentatives de piratage par analyse de la consommation d'un circuit intégré, une première technique connue, dite logicielle, consiste à masquer l'exécution des opérations sensibles du point de vue de la sécurité des données ou de l'algorithme par des quantités aléatoires introduites à différentes étapes des traitements.

Une deuxième technique connue, dite matérielle, consiste à dupliquer les cellules de traitement numérique pour effectuer plusieurs calculs en parallèle et masquer ainsi les calculs sensibles.

Quelle que soit la technique utilisée, le signal électrique représentatif de la signature en courant de l'algorithme reste présent, même masqué, dans les courants Ips et Iss.

Le document US-A-2003/118190 décrit un circuit intégré comportant un circuit de découpage capacitif à plusieurs capacités commutées.

La présente invention sera décrite par la suite en relation avec un exemple d'application à une puce (par exemple d'une carte à puce) intégrant tous les circuits, mais elle s'applique plus généralement à tout circuit ou système électronique intégrant, dans une zone sécurisée, un circuit susceptible de subir des tentatives de piratages par analyse de sa consommation.

### Résumé de l'invention

La présente invention vise à pallier tout ou partie des inconvénients des techniques connues pour masquer l'exécution de traitements numériques par un circuit intégré contre des analyses de sa consommation.

L'invention vise plus particulièrement à proposer une solution compatible avec une intégration de tous les circuits dans une même puce.

L'invention vise également à proposer une solution ne nécessitant aucune modification de la charge alimentée.

Selon un premier aspect, l'invention vise à brouiller la signature en courant des traitements numériques au moins côté alimentation du circuit intégré.

Selon un deuxième aspect, l'invention vise à brouiller la signature en courant des traitements numériques côté masse du circuit intégré.

Pour atteindre tout ou partie de ces objets ainsi que d'autres, la présente invention prévoit un circuit intégré comportant, entre une borne de masse d'une charge interne au circuit et une borne de masse d'application d'une tension externe d'alimentation de ce circuit, au moins un premier régulateur linéaire en parallèle avec au moins un circuit de découpage capacitif à une ou plusieurs capacités commutées, ledit circuit de découpage étant activé, au moins dans une phase de fonctionnement du circuit intégré, en même temps que le premier régulateur linéaire.

Selon un mode de réalisation de la présente invention, ladite phase correspond à une phase dans laquelle un processeur de calcul que contient la charge est actif.

Selon un mode de réalisation de la présente invention, le circuit de découpage est dimensionné en fonction de la différence de consommation du circuit intégré entre sa consommation moyenne et sa consommation pendant des calculs exécutés par le processeur.

Selon un mode de réalisation de la présente invention, ledit circuit de découpage est activé dès que le courant consommé par la charge dépasse un seuil.

Selon un mode de réalisation de la présente invention, ledit circuit à découpage est actif en permanence.

Selon un mode de réalisation de la présente invention, un deuxième régulateur linéaire rapide par rapport au premier régulateur linéaire à polarisation adaptative, est intercalé entre la borne de masse de la charge et la borne de masse d'application de la tension externe.

Selon un mode de réalisation de la présente invention, ledit deuxième régulateur linéaire comporte un transistor MOS à canal P, en série avec un premier transistor MOS à canal N du premier régulateur linéaire, entre lesdites bornes de masse de la charge et d'application de la tension externe.

Selon un mode de réalisation de la présente invention, le circuit de découpage comporte plusieurs condensateurs dont la charge est organisée au moins pour certains en parallèle et dont la décharge est organisée en série.

Selon un mode de réalisation de la présente invention, le circuit de découpage est de type hacheur.

Selon un mode de réalisation de la présente invention, au moins un premier régulateur linéaire supplémentaire à polarisation adaptative et au moins un circuit d'alimentation à découpage capacitif supplémentaire à une ou plusieurs capacités commutées sont intercalés entre une borne d'alimentation du circuit et une borne d'alimentation de la charge.

Selon un mode de réalisation de la présente invention, un deuxième régulateur linéaire supplémentaire, rapide par rapport au premier régulateur linéaire supplémentaire, est intercalé entre les sorties du premier régulateur supplémentaire et du circuit à découpage supplémentaire et la borne d'alimentation de la charge.

Selon un mode de réalisation de la présente invention, ledit premier régulateur linéaire supplémentaire comporte un transistor MOS à canal P, en série avec au moins un premier transistor MOS à canal N du deuxième régulateur linéaire supplémentaire, entre la borne d'alimentation du circuit et la borne d'alimentation de la charge.

L'invention prévoit également un procédé de brouillage de la signature en courant d'une charge comportant au moins un circuit intégré exécutant des traitements numériques, consistant, au moins côté masse de la charge, à combiner un courant absorbé par un premier régulateur linéaire avec un courant absorbé par au moins un circuit de découpage capacitif à une ou plusieurs capacités commutées.

Selon un mode de mise en oeuvre de la présente invention, lesdits courants sont combinés, au moins pendant une phase où le processeur est activé.

Selon un mode de mise en oeuvre de la présente invention, ledit circuit de découpage est activé quand le courant fourni par la charge dépasse un seuil.

Selon un mode de mise en oeuvre de la présente invention, ledit circuit de découpage est activé en permanence. Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 décrite précédemment représente, de façon très schématique, une carte à puce à contacts du type auquel s'applique, par exemple, la présente invention ;
la figure 2 décrite précédemment représente, de façon très schématique, une carte à puce sans contact du type auquel s'applique, par exemple, la présente invention ;
la figure 3 décrite précédemment représente un exemple classique de régulateur d'alimentation d'une puce d'une carte avec ou sans contact ;
la figure 4 représente, de façon très schématique et sous forme de blocs, une alimentation à capacités commutées ;
la figure 5 représente un mode de réalisation de circuits d'alimentation d'une charge et de brouillage de son courant de masse selon la présente invention ;
la figure 6 est un chronogramme représentant le courant dans la charge du circuit d'alimentation de la figure 5 ;
la figure 7 représente, de façon schématique et sous forme de blocs, un mode de réalisation d'un circuit d'alimentation d'une charge et de brouillage de son courant de masse selon la présente invention ;
la figure 8 représente un mode de réalisation préférée d'un circuit d'alimentation d'une charge selon le premier aspect de l'invention ;
la figure 9 représente une variante de circuit de brouillage du courant de masse selon le deuxième aspect de l'invention ;
la figure 10 représente, de façon simplifiée, un exemple de circuit hacheur utilisable dans les circuits d'alimentation et de brouillage selon l'invention ; et
la figure 11 représente schématiquement un exemple de convertisseur abaisseur à capacités commutées utilisable dans les circuits d'alimentation et de brouillage selon l'invention.

Les mêmes éléments ont été désignés par les mêmes références aux différentes figures. Pour des raisons de clarté, seuls les éléments qui sont utiles à la compréhension de l'invention ont été représentés aux figures et seront décrits par la suite. En particulier, les détails constitutifs de la charge dont le courant d'alimentation ou de masse est brouillé n'ont pas été exposés, l'invention étant compatible avec toute charge classique.

### Description détaillée

Pour masquer la signature en courant d'une puce de circuit intégré, on pourrait penser remplacer le régulateur linéaire classique (figure 3) par un convertisseur abaisseur à capacités commutées.

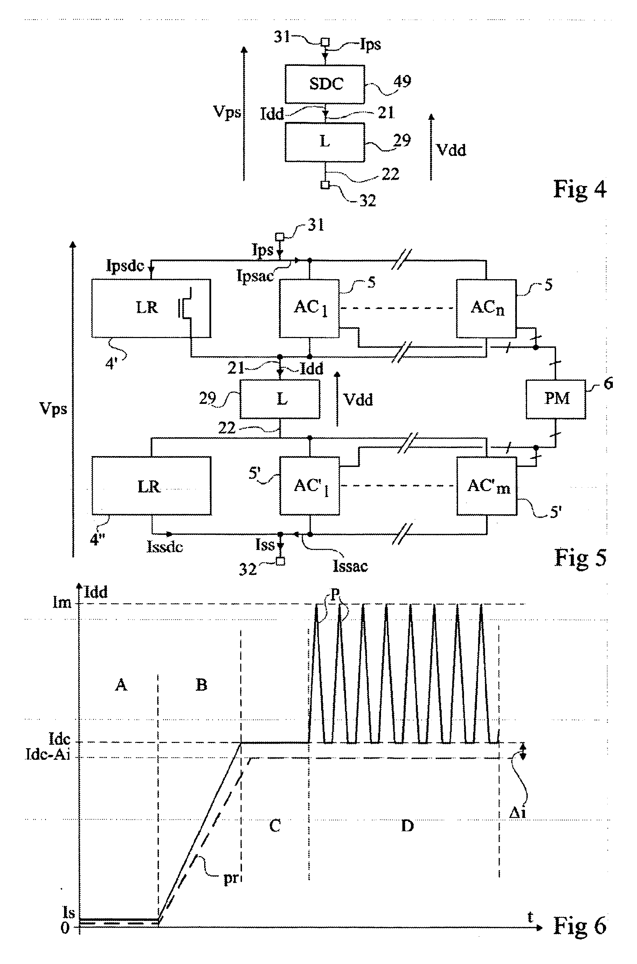

La figure 4 représente, de façon très schématique et sous forme de blocs, une telle solution. Un circuit 49 formant un convertisseur abaisseur à capacités commutées (SDC ou "Step Down Converter") est intercalé entre une borne 31 d'application du potentiel positif d'une tension d'alimentation externe Vps et une borne interne 21 d'application d'un potentiel positif d'une tension Vdd d'alimentation d'une charge 29 (L) constituant les circuits internes à la puce. Les niveaux de référence des tensions Vps et Vdd sont, par exemple, une masse commune (bornes 22 et 32 confondues).

Un intérêt d'un convertisseur abaisseur à capacités commutées est que, par la commutation des capacités entre des phases de charge et de décharge, le courant Ips absorbé par le convertisseur 49 sur le plot 31 est décorrélé du courant Idd fourni à la charge 29. Un autre intérêt est qu'il offre un rendement théorique maximum supérieur à celui d'un convertisseur linéaire. Le rendement théorique maximum d'un régulateur linéaire est Vdd/Vps (car Idd=Ips) tandis que celui d'un convertisseur abaisseur à capacités commutées est (Vdd.Idd)/(Vps.Ips), soit en théorie 100%.

Toutefois, une telle solution n'est pas compatible avec les contraintes de miniaturisation des cartes à puce. En effet, la consommation du circuit (généralement plusieurs dizaines de milliampères) nécessiterait des valeurs de capacités de plusieurs dizaines de nanofarads qui engendreraient des surfaces de plusieurs millimètres carrés, rendant cette solution non intégrable.

De plus, il n'est pas envisageable de réaliser le convertisseur à capacités commutées sur une puce séparée car cela rendrait accessible la tension d'alimentation Vdd de la charge au pirate éventuel, annulant ainsi l'effet de brouillage des capacités commutées sur le courant consommé.

En outre, cela ne solutionne pas la présence d'une signature, même atténuée, côté masse du circuit intégré.

La figure 5 représente, de façon très schématique et sous forme de blocs, un mode de réalisation d'un circuit intégré selon l'invention dont une charge 29 (L) reçoit une tension d'alimentation Vdd régulée à partir d'une tension Vps appliquée entre deux bornes 31 et 32 du circuit intégré.

Un régulateur linéaire 4' (LR) est connecté en parallèle avec un ou plusieurs (n) circuits 5 (AC1, ... ACn) à une ou plusieurs capacités commutées entre la borne 31 et la borne 21 d'application du potentiel positif de la tension Vdd sur la charge 29. De façon similaire, un régulateur linéaire 4" est connecté en parallèle avec un ou plusieurs (m) circuits 5' (AC'1, ..., AC'm) à une ou plusieurs capacités commutées entre la borne 22 de masse de la charge 21 et la borne 32 d'application du potentiel de référence (masse externe) de la tension Vps. Enfin, un circuit 6 (PM) génère des signaux de commande pour les différents circuits 5 et 5' en fonction de la consommation de la charge 29 et, préférentiellement, des circuits internes qui sont utilisés.

La figure 6 est un chronogramme illustrant, sans respect d'échelle, des exemples d'allures du courant Idd dans la charge 29 en fonction du temps. Pour simplifier, quatre phases successives A, B, C et D ont été illustrées en figure 6 et correspondent respectivement à une phase de veille, une phase de démarrage (sortie de veille), une phase dans laquelle aucun calcul sensible n'est effectué et une phase de calculs algorithmiques sensibles du point de vue de la sécurité en courant.

En veille (phase A), le courant Idd a une valeur minimale Is. Le courant Is est, de préférence, fourni par le régulateur linéaire et au moins un circuit à découpage (à capacités commutées).

Dans la phase B de démarrage, le régulateur linéaire 4' fournit la majeure partie du courant nécessaire jusqu'à ce que le courant total atteigne, par exemple, un niveau Idc correspondant au niveau de consommation stable moyen du circuit (phase C).

Par rapport à ce courant Idc, lorsque des opérations sont exécutées par le circuit intégré (phase D), on assiste à de brusques variations du courant Idd (pics p en figure 6) jusqu'à un niveau Im correspondant au courant maximal. Pour simplifier, tous les pics p ont été représentés avec la même amplitude. En pratique, les amplitudes et la fréquence des pics dépendent des calculs exécutés. La plage de courant entre les valeurs Idc et Im correspond à la plage dans laquelle est présente, sur le courant Idd, la signature en courant des calculs exécutés par le circuit intégré.

La présente invention tire profit du fait que le courant d'alimentation d'un circuit intégré exécutant des calculs de type algorithmique peut se décomposer en deux. Une première partie du courant dite continue ou "dc" varie peu dans le temps. Ce courant contient peu d'information sensible et représente la majeure partie de l'énergie totale consommée. Une deuxième partie du courant dite variable ou "ac" varie rapidement dans le temps sous l'effet de commutations des circuits logiques de calcul et constitue l'essentiel des signatures en courant des algorithmes de calcul.

Ainsi, il devient possible d'utiliser des structures à capacités commutées tout en restant compatible avec une intégration sur une même puce que la charge et avec les besoins de miniaturisation. Typiquement, le rapport entre l'énergie à variation lente et l'énergie à variation rapide est compris entre 5 et 30%. Des capacités de l'ordre du nanofarad suffisent alors et deviennent acceptables en surface.

Les circuits à capacités commutées pourront être des convertisseurs abaisseurs à capacités commutées, des hacheurs et plus généralement toute alimentation à découpage sans élément inductif.

Selon le premier aspect de l'invention, au moins pendant la phase D, l'énergie est fournie non seulement par le régulateur linéaire 4' mais également par le ou les circuits d'alimentation à découpage capacitifs 5. Le courant Ips se trouve alors divisé entre un courant Ipsdc absorbé par le régulateur linéaire 4' et un courant Ipsac absorbé par les circuits à découpage. Ce courant Ipsac est décorrélé du courant Idd dans la charge 29.

De préférence, une partie Δi du courant Idc est fournie par au moins un circuit d'alimentation à découpage. Cette marge permet de compenser le temps de latence de la boucle de régulation relativement lente du régulateur 4'. Cela empêche toute fuite d'information à variation rapide du courant sur le canal à variation lente.

Dans un premier mode de réalisation, l'activation d'au moins un circuit à découpage est effectuée en fin de phase de démarrage et les régulations linéaire et à découpage restent combinées pendant les phases C et D.

Dans un deuxième mode de réalisation préféré (pointillés pr en figure 6), au moins un circuit à découpage (à haut rendement) est activé en permanence. La quantité Δi est alors proportionnelle au courant consommé pendant les phases A et B.

Un avantage de ce mode de réalisation préféré est que le circuit est protégé même en cas de signature en courant exploitable pendant l'état de veille.

Un autre avantage est que le rendement global est amélioré.

Plus la quantité Δi est importante, plus les circuits à capacités commutées prennent de la place. On cherchera donc un compromis entre la surface du circuit et la marge de sécurité acceptable.

Selon le deuxième aspect de l'invention, on combine une régulation linéaire et une régulation à découpage du courant de masse au moins pendant les phases C et D et de préférence en permanence. Ainsi, le courant Iss se trouve divisé entre un courant Issdc fourni par le régulateur linéaire 4" et un courant Issac fourni par les circuits 5' à découpage capacitif. Ce courant Issac est décorrélé du courant sortant par le plot 22 de la charge 21 en étant "haché" par le ou les circuits 5'.

Dans le mode de réalisation de la figure 5, les deux aspects de l'invention sont combinés.

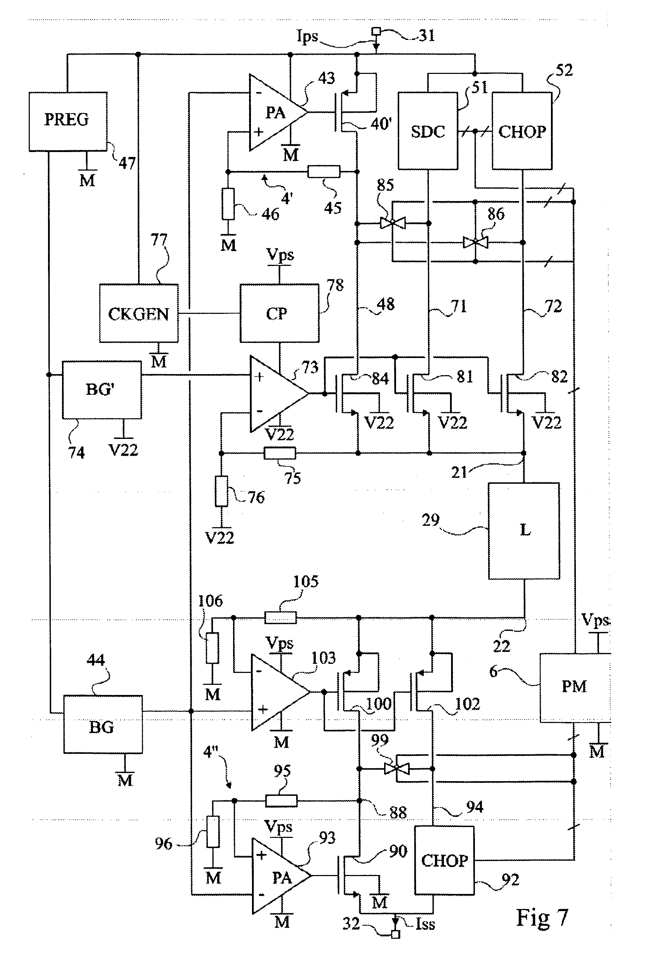

La figure 7 représente un mode de réalisation d'un circuit intégré selon la présente invention. Dans cet exemple, un premier circuit à capacités commutées 51 de type convertisseur abaisseur (SDC) est en parallèle avec un deuxième circuit 52 d'alimentation à découpage capacitif de type hacheur (CHOP), ces deux circuits constituants les canaux rapides.

Selon ce mode de réalisation, le régulateur linéaire 4' est basé sur un transistor MOS 40' à canal P. Ce transistor 40' a sa source et son substrat (bulk) reliés directement à la borne 31 et est commandé par un amplificateur 43 à transconductance et à polarisation adaptative (PA), alimenté par la tension Vps. Deux résistances 45 et 46 constituent un pont diviseur entre le drain du transistor 40' et la masse M dont le point milieu est connecté à l'entrée de mesure (par exemple, non inverseuse) de l'amplificateur 43. L'entrée de référence (par exemple, inverseuse) de l'amplificateur 43 est reliée en sortie d'un premier circuit 44 (BG) de génération d'une tension de référence (bandgap) à partir de la tension Vps. En pratique, le circuit 44 est alimenté par un prérégulateur 47 (PREG) de la tension Vps (aux figures précédentes, ce prérégulateur a été supposé compris dans le bloc 44). Un tel prérégulateur est en pratique un régulateur linéaire.

Le recours à un amplificateur à polarisation adaptative permet de filtrer les variations rapides (évitant ainsi les signatures en courant) tout en améliorant le rendement en régulant la polarisation sur les appels de courant à variations lente (d'amplitude importante).

De préférence, un régulateur linéaire, rapide (par rapport au régulateur 4') et à faible chute de tension série (LDO), est intercalé entre les circuits 4', 51 et 52 et la borne 21 d'alimentation de la charge 29. Les sorties 48, 71 et 72 des circuits 4', 51 et 52 sont reliées aux sources respectives de trois transistors MOS à canal N 84, 81 et 82 du régulateur rapide. Les transistors 81, 82 et 84 sont commandés par un même signal issu d'un amplificateur 73 rapide, alimenté par un circuit 78 (CP) de pompe de charge (optionnel). Le circuit 78 est commandé par un circuit 77 de génération d'une horloge (CKGEN) alimenté par la tension Vps. Le circuit 78 reçoit le potentiel positif de la tension Vps de la borne 31. Le rôle du circuit de pompe de charge 74 est de fournir une tension suffisante à la polarisation des transistors 81, 82 et 84 pour le cas où la tension Vps ne soit pas elle-même suffisante.

L'entrée de référence (par exemple, non inverseuse) de l'amplificateur 73 est reliée en sortie d'un deuxième circuit 74 (BG') de génération d'une tension de référence (bandgap) alimenté par le prérégulateur 47. Son entrée de mesure (par exemple, inverseuse) est connectée au point milieu d'un pont diviseur constitué de deux résistances 75 et 76 en série entre les sources des transistors 81, 82, 84 reliées à la borne 21 d'alimentation positive de la charge 29 et sa masse 22 (potentiel V22). Les bornes de masse de l'amplificateur 73 et du circuit 74 ainsi que les substrats (bulks) des transistors 81, 82 et 84 sont reliés à la bornes 22, c'est-à-dire à la masse V22 de la charge. Comme les transistors 81, 82 et 84 sont commandés par un même signal, leurs tailles respectives sont adaptées aux courants qu'ils sont censés véhiculer.

Le fait que le transistor 40' soit à canal P et que le transistor 84 (et les transistors 81 et 82) soit à canal N isole le point 21 du point 31.

La boucle de régulation rapide basée sur l'amplificateur 73 permet de stabiliser la tension d'alimentation Vdd face aux variations des tensions intermédiaires (noeuds 48, 71 et 72), du courant d'alimentation interne Idd et de la température.

La boucle de régulation rapide peut éventuellement être omise en cas de tension d'alimentation Vps stable et de consommation stable de la charge.

De préférence, les sources 71 et 72 des transistors 81 et 82 sont connectables, par des interrupteurs 85 et 86, au drain 48 du transistor 84. En variante, ces interrupteurs sont de simples fils ou des résistances. Le rôle des interrupteurs 85 et 86 est d'équilibrer les transferts d'énergie entre les canaux de régulation.

Les interrupteurs 85 et 86 ainsi que les circuits 51 et 52 sont commandés par le circuit 6 (PM) alimenté par la tension Vps (masse M). Le circuit 6 est, par exemple, un circuit de gestion de l'horloge de la charge ou un circuit indépendant dédié à la fonction de commande. De préférence, le circuit 6 de commande est le microcontrôleur de la charge 29 et est donc inclus dans celle-ci (et alors alimenté par la tension Vdd). La commande des capacités des circuits 51 et 52 pourra être, par exemple, synchronisée avec l'horloge du processeur que comporte le microcontrôleur de la charge afin de réduire l'amplitude des variations des noeuds internes du circuit d'alimentation. En variante, cette commande est réalisée de façon à générer des signatures factices sur le courant Ips.

La marge (Δi, figure 6) entre l'utilisation des régulations linéaire et à découpage est fixé par la boucle de régulation basée sur l'amplificateur 43 et notamment par les résistances 45 et 46.

Côté courant de masse de la charge 29, le régulateur linéaire 4" est constitué d'un amplificateur opérationnel 93 à transconductance et à polarisation adaptative (PA), commandant un transistor MOS 90 à canal N dont le drain et le substrat sont connectés à la borne 32 (masse M). L'amplificateur 93 est alimenté par la tension Vps et reçoit (par exemple, sur son entrée inverseuse) la tension de référence fournie par le circuit 44. Son entrée de mesure (par exemple, non inverseuse) est reliée au point milieu d'un pont diviseur constitué de résistances 95 et 96 en série entre la source 88 du transistor 90 et la masse M.

L'élément de découpage du courant de masse est, par exemple, un hacheur 92 (CHOP) dont la borne d'entrée 94 est connectable par un interrupteur 99 au noeud 88 et dont la borne de sortie est reliée directement à la borne 32. Le circuit 92 et l'interrupteur 99 sont commandés par le circuit 6.

De préférence, les noeuds 88 et 94 sont individuellement reliés aux drains respectifs de deux transistors MOS 100 et 102 à canal P d'un régulateur linéaire rapide (par rapport au régulateur 4") à faible chute de tension série. Les sources et substrats des transistors 100 et 102 sont interconnectés à la borne 22 de sortie de masse de la charge 29. Ces transistors sont commandés par un amplificateur 103 à transconductance alimenté par la tension Vps et dont l'entrée de référence (par exemple, non inverseuse) reçoit la tension fournie par le circuit 44. L'entrée de mesure (par exemple, inverseuse) de l'amplificateur 103 est reliée au point milieu d'un pont diviseur constitué de deux résistances 105 et 106 en série entre la borne 22 et la masse M. Comme les transistors 100 et 102 sont commandés par un même signal, leurs tailles respectives sont adaptées aux courants qu'ils sont censés véhiculer.

On voit que le noeud 22 est rendu flottant par rapport à la masse 32, ce qui provient de la décorrélation du courant de sortie Iss par rapport au courant dans la charge 29. Pour le reste, le fonctionnement et la régulation entre les différentes branches s'effectuent de façon similaire à celle exposée précédemment en relation avec la partie positive de l'alimentation.

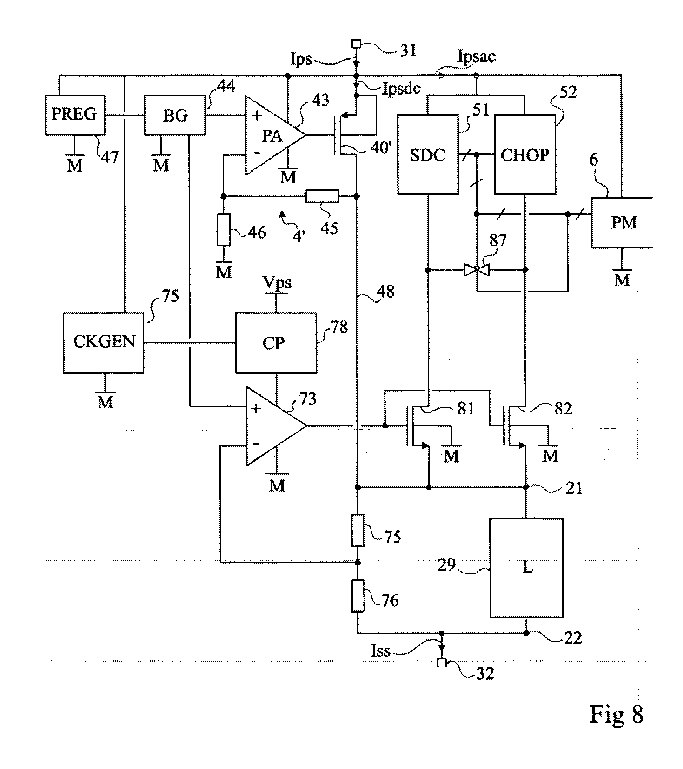

La figure 8 représente un mode de réalisation préféré d'un circuit selon le premier aspect de l'invention dans lequel au moins la partie positive de l'alimentation est brouillée. On retrouve, entre les bornes 31 et 21, une structure similaire à celle décrite en relation avec la figure 7, côté alimentation positive. Une différence est que, comme les bornes 22 et 32 sont confondues, l'amplificateur 73 et les substrats des transistors 81 et 82 sont connectés à la masse M de la tension externe Vps. Par ailleurs, un seul circuit 44, référencé à la masse M, suffit.

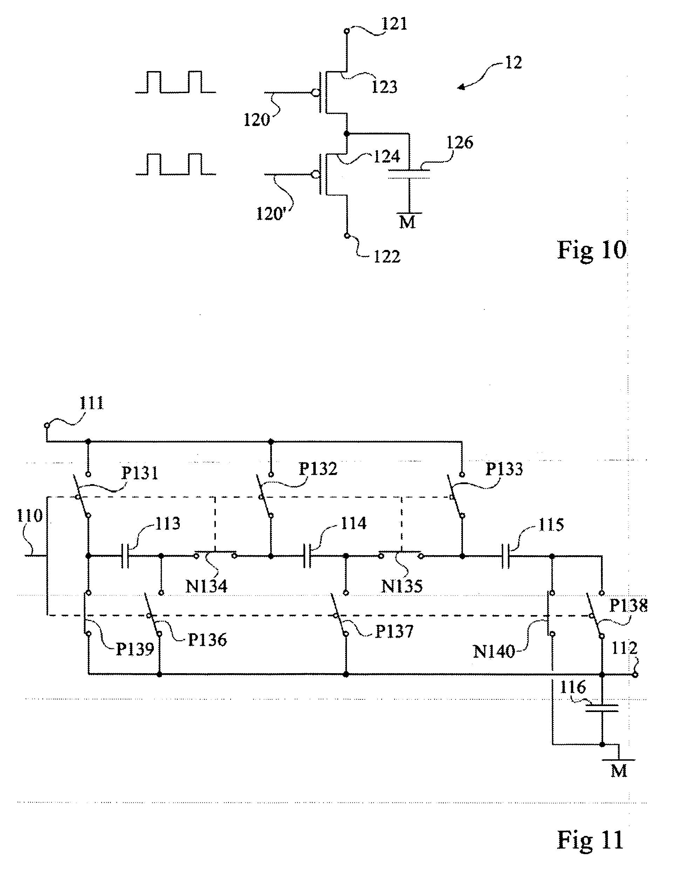

Si les interrupteurs 85 et 86 de la figure 7 (non représentés en figure 8) sont prévus, le circuit ne brouille que la partie positive de l'alimentation. Pour brouiller la masse, la masse interne 22 doit être, comme dans le circuit précédent de la figure 7, différenciée de la masse externe M pour effectuer une régulation entre la borne 22 et la borne 32. Toutefois, si les interrupteurs 85 et 86 sont omis ou, comme cela est représenté en figure 8, remplacés par un interrupteur 87 reliant les sorties 71 et 72, et pourvu que la charge présente à ses bornes une capacité (au moins parasite), le circuit brouille alors aussi la masse, sans la régulation de la figure 7. En effet, les sorties des circuits 51 et 52 sont alors indépendantes de la sortie 48 du régulateur linéaire. La capacité interne des circuits 51 et 52 va se charger et se décharger seulement avec la partie alternative du courant. La consommation alternative de la charge est alors uniquement fournie par des boucles internes pendant la décharge des capacités de sortie des circuits 51 et 52. La borne 32 ne reçoit alors que la partie continue du courant de la charge. Cela génère une équivalence entre les courants Ips et Iss en terme de signature de l'activité de la charge. Ce résultat provient de la structure interne des circuits à capacité commutée qui comportent un élément capacitif entre leurs sorties et la masse, comme cela sera mieux compris en relation avec les figures 10 et 11.

La figure 8 illustre par ailleurs une variante de l'invention dans laquelle le régulateur rapide basé sur l'amplificateur 73 ne contrôle que les transistors 81 et 82 des branches à découpage, la sortie 48 du régulateur linéaire étant directement connectée au noeud 21. Une telle variante rend la boucle de régulation encore plus rapide mais isole moins la régulation linéaire (donc la tension Vps) des variations rapides.

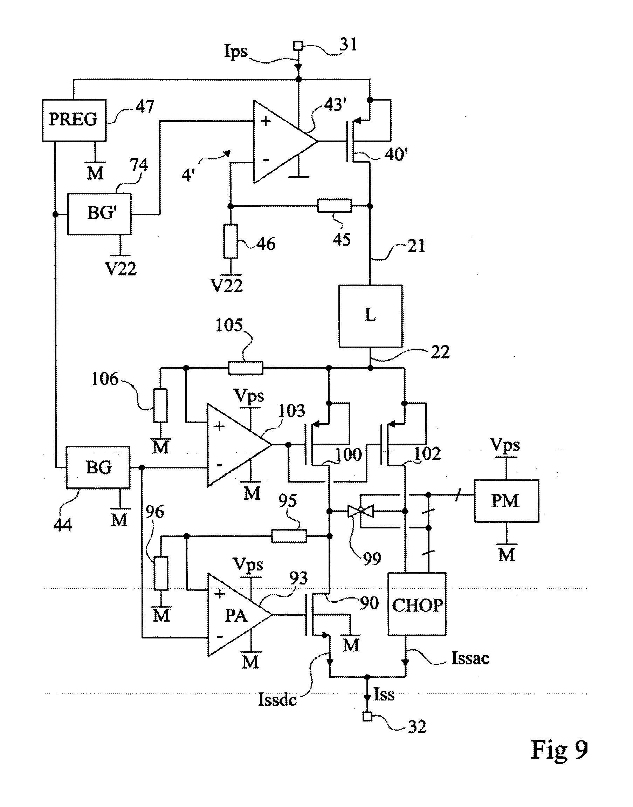

La figure 9 représente un autre mode de réalisation simplifié selon le deuxième aspect de la présente invention dans lequel seule la partie de courant de masse Iss du circuit est brouillée en étant répartie entre une régulation linéaire et une alimentation à découpage capacitif. Côté courant d'alimentation Ips, seul un régulateur linéaire 4' du type de celui illustré par la figure 7 est utilisé, la résistance 46 étant connectée à la masse (flottante) 22 de la charge 29 et non à la masse externe M, l'entrée non inverseuse de l'amplificateur 43' (sans polarisation adaptative) recevant une référence fournie par un circuit 74 (BG') référencé au potentiel V22.. Entre la charge 29 et la masse externe M, on retrouve la structure décrite en relation avec la figure 7.

Pour une mise en oeuvre côté masse, on doit disposer d'une technologie de circuit intégré permettant de différencier le noeud de masse du noeud du substrat pour fournir les polarités adaptées aux substrats des différents transistors. Par exemple, de tels circuits intégrés sont réalisables dans une technologie de type Flash (à triple caissons), de type BICMOS épitaxiée, ou dans des technologies de type silicium sur isolant (SOI), etc.

La figure 10 représente une structure simplifiée d'un circuit à capacité commutée de type hacheur 12. Les bornes 121 et 122 d'entrée-sortie du hacheur sont reliées par deux transistors MOS 123 et 124 en série à canal P, dont les grilles 120 et 120' reçoivent des signaux de commande à phases non recouvrantes. Le point milieu entre les transistors 123 et 124 est relié à une première électrode d'un condensateur 126 dont l'autre électrode est connectée à la masse M. Quand le signal de commande est à l'état bas, le transistor 123 conduit tandis que le transistor 124 est bloqué et le condensateur 126 se charge. Quand le signal de commande est à l'état haut, le condensateur se décharge à travers le transistor 124, le transistor 123 étant bloqué.

La figure 11 représente un mode de réalisation d'un convertisseur abaisseur 11 à capacités commutées du type de ceux utilisés pour le circuit 51 (figures 7 et 8). Le principe est de connecter des condensateurs 113, 114 et 115 pour une charge en parallèle par un courant entrant par une borne 111 du circuit et pour une décharge en série par un courant sortant par une borne 112, un quatrième condensateur 116 (de sortie) reliant la borne 112 à la masse. Trois interrupteurs P131, P132 et P133 relient la borne 111 à une première électrode respective des condensateurs 113, 114, et 115 et trois interrupteurs P136, P137 et P138 relient leurs deuxièmes électrodes respectives à la borne 112. Deux interrupteurs N134 et N135 sont intercalés respectivement entre les condensateurs 113 et 114 et entre les condensateurs 114 et 115. Enfin, deux interrupteurs P139 et N140 relient respectivement la première électrode du condensateur 113 à la borne 112 et la deuxième électrode du condensateur 115 à la masse. Par exemple, les interrupteurs P131, P132, P133, P136, P137, P138 et P139 sont des transistors MOS à canal P et les interrupteurs N134, N135 et N140 sont des transistors MOS à canal N. Les interrupteurs sont commandés par un signal appliqué sur une entrée 10 du circuit (ou deux signaux à phases non recouvrantes pour éviter tout risque de conduction simultanée lors des commutations). Pendant les phases de décharge, les interrupteurs P131, P132, P133, P136, P137 et P138 sont ouverts et les interrupteurs N134, 135, P129 et N140 sont fermés. Les condensateurs 113, 114 et 115 sont donc en série entre la borne 112 et la masse, et cette association en série est en parallèle avec le condensateur 116. Pendant les phases de charge, les interrupteurs P131, P132, P133, P136, P137 et P138 sont fermés et les interrupteurs N134, N135, P139 et N140 sont ouverts. Les condensateurs 113, 114 et 115 sont donc en parallèle entre les bornes 111 et 112, et cette association en parallèle est en série avec le condensateur 116 relié à la masse.

Le choix entre un convertisseur abaisseur à capacités commutées et un hacheur dépend d'une priorité entre une faible chute de tension et un courant plus élevé. L'avantage du hacheur est qu'il engendre une chute de tension plus faible et qu'il prend moins de place. Son rendement est toutefois limité. L'avantage d'un convertisseur abaisseur à capacités commutées est de fournir un courant plus important donc d'améliorer le rendement. Côté alimentation positive, le fait de combiner les deux solutions permet d'optimiser le système, par exemple, en affectant le circuit à capacités commutées à une phase de calcul relativement gourmande en énergie par rapport à une autre phase de calcul à laquelle le hacheur est affecté. Côté masse, les circuits à découpage seront préférentiellement de type hacheur en raison de leur moindre encombrement et de l'absence de besoin de rendement.

Un avantage de la présente invention est qu'elle permet de décorréler la signature en courant d'un circuit intégré des calculs algorithmiques qu'il exécute tout en restant compatible avec une intégration d'encombrement réduit.

Un autre avantage de la présente invention est qu'elle permet de réaliser cette décorrélation du courant de la charge non seulement côté alimentation positive mais également côté masse.

Un autre avantage de la présente invention est que le recours permanent à un circuit de découpage pour fournir une partie du courant diminue, vu de l'extérieur, le courant total consommé par la charge.

Bien entendu, la présente invention est susceptible de diverses variantes et modifications qui apparaîtront à l'homme de l'art. En particulier, la réalisation pratique des circuits de régulation à découpage en utilisant des outils en eux-mêmes classiques est à la portée de l'homme du métier à partir des indications fonctionnelles données ci-dessus.

De plus, le choix des dimensions à donner à ces différents circuits est également à la portée de l'homme du métier en fonction de l'application. A cet égard, on notera que l'on peut dédier différents circuits à découpage à différentes fonctions de la charge, ces circuits étant commandables individuellement en fonction des traitements opérés par la charge.

En outre, la marge de sécurité Δi fixée par la boucle de régulation basée sur l'amplificateur 43 et/ou l'amplificateur 93 peut être rendue paramétrable, par exemple, en prévoyant un ou plusieurs registres de commande d'un réseau de résistances commutables pour les résistances 45, 46 et 95, 96 respectivement.

Enfin, bien que l'invention ait été décrite en relation avec une tension d'alimentation positive par rapport à la masse, elle s'applique également à une alimentation négative et une telle transposition est à la portée de l'homme du métier.

## Revendications

1. Circuit intégré, comportant au moins un circuit d'alimentation de découpage capacitif (5', 92) à une ou plusieurs capacités commutées, **caractérisé en ce qu'**il comporte, entre une borne de masse (22) d'une charge (29) interne au circuit et une borne (32) destinée à être connectée à la masse d'une source de tension d'alimentation externe (Vps), au moins un premier régulateur linéaire (4") en parallèle avec ledit circuit de découpage capacitif, ce circuit de découpage étant activé, au moins dans une phase (D) de fonctionnement du circuit intégré, en même temps que le premier régulateur linéaire.

2. Circuit selon la revendication 1, dans lequel ladite phase (D) correspond à une phase dans laquelle un processeur de calcul que contient la charge (29) est actif.

3. Circuit selon la revendication 2, dans lequel le circuit de découpage (5', 92) est dimensionné en fonction de la différence de consommation du circuit intégré entre sa consommation moyenne et sa consommation pendant des calculs exécutés par le processeur.

4. Circuit selon la revendication 1, dans lequel ledit circuit de découpage (5', 92) est activé dès que le courant consommé par la charge dépasse un seuil (Idc-Δi).

5. Circuit selon la revendication 1, dans lequel ledit circuit à découpage est actif en permanence.

6. Circuit selon la revendication 1, dans lequel un deuxième régulateur linéaire (100, 102, 103, 105, 106) rapide par rapport au premier régulateur linéaire (4") à polarisation adaptative, est intercalé entre la borne de masse (22) de la charge (29) et la borne de masse (32) d'application de la tension externe (Vps).

7. Circuit selon la revendication 6, dans lequel ledit deuxième régulateur linéaire comporte un transistor MOS à canal P (100), en série avec un premier transistor MOS à canal N (90) du premier régulateur linéaire (4"), entre lesdites bornes de masse (22, 32) de la charge (29) et d'application de la tension externe (Vps).

8. Circuit selon la revendication 1, dans lequel le circuit de découpage (5') comporte plusieurs condensateurs (113, 114, 115) dont la charge est organisée au moins pour certains en parallèle et dont la décharge est organisée en série.

9. Circuit selon la revendication 1, dans lequel le circuit de découpage (92, 12) est de type hacheur.

10. Circuit selon la revendication 1, dans lequel au moins un premier régulateur linéaire supplémentaire (4') à polarisation adaptative et au moins un circuit d'alimentation à découpage capacitif supplémentaire (5, 51, 52) à une ou plusieurs capacités commutées sont intercalés entre une borne (31) d'alimentation du circuit et une borne (21) d'alimentation de la charge (29).

11. Circuit selon la revendication 10, dans lequel un deuxième régulateur linéaire supplémentaire (73, 75, 76, 81, 82, 84), rapide par rapport au premier régulateur linéaire supplémentaire (4'), est intercalé entre les sorties du premier régulateur supplémentaire et du circuit à découpage (5, 51, 52) supplémentaire et la borne (21) d'alimentation de la charge (29).

12. Circuit selon la revendication 11, dans lequel ledit premier régulateur linéaire supplémentaire (4') comporte un transistor MOS à canal P (40'), en série avec au moins un premier transistor MOS à canal N (84) du deuxième régulateur linéaire supplémentaire (73, 75, 76, 81, 82, 84), entre la borne (31) d'alimentation du circuit et la borne (21) d'alimentation de la charge (29).

13. Procédé de brouillage de la signature en courant d'une charge (29) comportant au moins un circuit intégré exécutant des traitements numériques et comportant au moins un circuit d'alimentation de découpage capacitif (5', 92) à une ou plusieurs capacités commutées, **caractérisé en ce qu'**il comporte l'étape de combiner, au moins côté masse (22) de la charge, un courant (Issdc) absorbé par un premier régulateur linéaire (4") avec un courant (Issac) absorbé par le circuit de découpage capacitif.

14. Procédé selon la revendication 13, dans lequel lesdits courants (Issdc, Issac) sont combinés, au moins pendant une phase (D) où le processeur est activé.

15. Procédé selon la revendication 13, dans lequel ledit circuit de découpage (5', 92) est activé quand le courant fourni par la charge (29) dépasse un seuil (Idc-Δi).

16. Procédé selon la revendication 13, dans lequel ledit circuit de découpage (5', 92) est activé en permanence.

## Claims

1. An integrated circuit comprising at least one capacitive switched-mode supply circuit (5', 92) with one or several switched capacitances, **characterized in that** it includes, between a ground terminal (22) of a load (29) internal to the circuit and a terminal (32) for connection to the ground of an external supply voltage (Vps), at least one first linear regulator (4") in parallel with said capacitive switched-mode circuit, said switched-mode circuit being activated, at least in an operation phase (D) of the integrated circuit, at the same time as the first linear regulator.

2. The circuit of claim 1, wherein said phase (D) corresponds to a phase in which a calculation processor contained by the load (29) is active.

3. The circuit of claim 2, wherein the switched-mode circuit (5', 92) is sized according to the power consumption difference of the integrated circuit between its average power consumption and its power consumption during calculations executed by the processor.

4. The circuit of claim 1, wherein said switched-mode circuit (5', 92) is activated as soon as the current consumed by the load exceeds a threshold (Idc-Δi).

5. The circuit of claim 1, wherein said switched-mode circuit is permanently active.

6. The circuit of claim 1, wherein a second linear regulator (100, 102, 103, 105, 106), fast with respect to the first adaptive biasing linear regulator (4"), is interposed between the ground terminal (22) of the load (29) and the ground terminal (32) of application of the external voltage (Vps).

7. The circuit of claim 6, wherein said second linear regulator comprises a P-channel MOS transistor (100), in series with a first N-channel MOS transistor (90) of the first linear regulator (4"), between said ground terminals (22, 32) of the load (29) and of application of the external voltage (Vps).

8. The circuit of claim 1, wherein the switched-mode circuit (5') comprises several capacitors (113, 114, 115) having their charge organized at least for some of them in parallel and having their discharge organized in series.

9. The circuit of claim 1, wherein the switched-mode circuit (92, 12) is of chopper type.

10. The circuit of claim 1, wherein at least one first additional adaptive biasing linear regulator (4') and at least one additional capacitive switched-mode power supply circuit (5, 51, 52) with one or several switched capacitances are interposed between a supply terminal (31) of the circuit and a supply terminal (21) of the load (29).

11. The circuit of claim 10, wherein a second additional linear regulator (73, 75, 76, 81, 82, 84), fast with respect to the first additional linear regulator (4'), is interposed between the outputs of the first additional regulator and of the additional switched-mode circuit (5, 51, 52) and the supply terminal (21) of the load (29).

12. The circuit of claim 11, wherein said first additional linear regulator (4') comprises a P-channel MOS transistor (40'), in series with at least one first N-channel MOS transistor (84) of the second additional linear regulator (73, 75, 76, 81, 82, 84), between the supply terminal (31) of the circuit and the supply terminal (21) of the load (29).

13. A method for scrambling the current signature of a load (29) comprising at least one integrated circuit executing digital processings and comprising at least one capacitive switched-mode supply circuit (5', 92) with one or several switched capacitances, **characterized in that** it comprises the step of combining, at least on the side of the load ground (22), a current (Issdc) absorbed by a first linear regulator (4") with a current (Issac) absorbed by the capacitive switched-mode circuit.

14. The method of claim 13, wherein said currents (Issdc, Issac) are combined, at least during a phase (D) where the processor is activated.

15. The method of claim 13, wherein said switched-mode circuit (5', 92) is activated when the current provided by the load (29) exceeds a threshold (Idc-Δi).

16. The method of claim 13, wherein said switched-mode circuit (5', 92) is permanently activated.

## Patentansprüche

1. Ein integrierter Schaltkreis mit wenigstens einem kapazitiven Schaltmodus-Versorgungsschaltkreis (5', 92) mit einer oder mehreren geschalteten Kapazitäten, **gekennzeichnet dadurch, dass** er Folgendes enthält, wenigstens einen ersten linearen Regler (4") zwischen einem Masseanschluss (22) einer Last (29) intern in dem Schaltkreis und einem Anschluss (32) zur Verbindung mit der Masse einer externen Versorgungsspannung (Vps), und zwar parallel zum kapazitiven Schaltmodus-Schaltkreis, wobei der Schaltmodus-Schaltkreis zur gleichen Zeit wie der erste lineare Regler, wenigstens in einer Betriebsphase (D) des integrierten Schaltkreises, aktiviert wird.

2. Schaltkreis nach Anspruch 1, wobei die Phase (D) einer Phase entspricht, in der ein Berechnungsprozessor, der die Last (29) enthält, aktiv ist.

3. Schaltkreis nach Anspruch 2, wobei der Schaltmodus-Schaltkreis (5', 92) dimensioniert ist gemäß der Leistungsverbrauchsdifferenz des integrierten Schaltkreises zwischen seinem durchschnittlichen Leistungsverbrauch und seinem Leistungsverbrauch während Berechnungen, die von dem Prozessor ausgeführt werden.

4. Schaltkreis nach Anspruch 1, wobei der Schaltmodus-Schaltkreis (5', 92) aktiviert wird sobald der Strom, der von der Last verbraucht wird, eine Schwelle (Idc-Δi) überschreitet.

5. Schaltkreis nach Anspruch 1, wobei der Schaltmodus-Schaltkreis permanent aktiv ist.

6. Schaltkreis nach Anspruch 1, wobei ein zweiter linearer Regler (100, 102, 103, 105, 106), der im Vergleich zum ersten linearen Reglers (4") mit angepasster Polarisation schnell ist, zwischen dem Masseanschluss (22) der Last (29) und dem Masseanschluss (32) der Anwendung der externen Spannung (Vps) dazwischen geschaltet ist.

7. Schaltkreis nach Anspruch 6, wobei der zweite lineare Regler einen P-Kanal MOS-Transistor (100) aufweist in Serie mit einem ersten N-Kanal MOS-Transistor (90) des ersten linearen Reglers (4"), zwischen den Masseanschlüssen (22, 32) der Last (29) und der Anwendung der externen Spannung (Vps).

8. Schaltkreis nach Anspruch 1, wobei der Schaltmodus-Schaltkreis (5') mehrere Kapazitäten (113, 114, 115) aufweist, wobei deren Ladung organisiert ist wenigstens für einige von diesen parallel und wobei deren Endladung seriell organisiert ist.

9. Schaltkreis nach Anspruch 1, wobei der Schaltmodus-Schaltkreis (92, 12) vom Typ Gleichspannungswandler ist.

10. Schaltkreis nach Anspruch 1, wobei wenigstens ein erster zusätzlicher linearer Regler (4') mit adaptiver Polarisierung und wenigstens ein zusätzlicher kapazitiver Schaltmodus-Leistungsversorgungsschaltkreis (5, 51, 52) mit einer oder mehreren geschalteten Kapazitäten zwischen einem Versorgungsanschluss (31) des Schaltkreises und einem Versorgungsanschluss (21) der Last (29) zwischengeschaltet ist.

11. Schaltkreis nach Anspruch 10, wobei ein zweiter zusätzlicher linearer Regler (73, 75, 76, 81, 82, 84), der im Vergleich zum ersten zusätzlichen linearen Reglers (4') schnell ist, zwischen den Ausgängen des ersten zusätzlichen Reglers und des zusätzlichen Schaltmodus-Schaltkreises (5, 51, 52) und dem Versorgungsanschluss (21) der Last (29) zwischengeschaltet ist.

12. Schaltkreis nach Anspruch 11, wobei der erste zusätzliche lineare Regler (4') einen P-Kanal MOS-Transistor (40') aufweist, und zwar in Serie mit wenigstens einem ersten N-Kanal MOS-Transistor (84) des zweiten zusätzlichen linearen Reglers (73, 75, 76, 81, 82, 84), zwischen Versorgungsanschluss (31) des Schaltkreises und des Versorgungsanschlusses (21) der Last (29).

13. Ein Verfahren zum Verwürfeln der aktuellen Signatur einer Last (29), die wenigstens einen integrierten Schaltkreis aufweist, der digitale Verarbeitungen ausführt und wenigstens einen kapazitiven Schaltmodus-Versorgungsschaltkreis (5', 92) mit einer oder mehreren geschalteten Kapazitäten aufweist, **gekennzeichnet dadurch, dass** es den Schritt des Kombinierens, wenigstens auf der Seite der Lastmasse (22), von einem Strom (Issdc), absorbiert durch einen ersten linearen Regler (4") mit einem Strom (Issac) absorbiert durch den kapazitiven Schaltmodus-Schaltkreis, aufweist.

14. Verfahren nach Anspruch 13, wobei die Ströme (Issdc, Issac) kombiniert werden, wenigstens während einer Phase (D), wo der Prozessor aktiviert ist.

15. Verfahren nach Anspruch 13, wobei der Schaltmodus-Schaltkreis (5', 92) aktiviert ist, wenn der Strom, der durch die Last (29) vorgesehen ist, eine Schwelle (Idc-Δi) überschreitet.

16. Verfahren nach Anspruch 13, wobei der Schaltmodus-Schaltkreis (5', 92) permanent aktiviert ist.
